(19) Europäisches Patentamt
European Patent Office
Office européen des brevets

(11) **EP 3 899 348 B1**

(12) **EUROPÄISCHE PATENTSCHRIFT**

(45) Veröffentlichungstag und Bekanntmachung des Hinweises auf die Patenterteilung:
**21.02.2024 Patentblatt 2024/08**

(21) Anmeldenummer: **19835275.9**

(22) Anmeldetag: **18.12.2019**

(51) Internationale Patentklassifikation (IPC):
**F17C 5/06** (2006.01)

(52) Gemeinsame Patentklassifikation (CPC):
**F17C 5/06;** F17C 2221/012; F17C 2223/0123;
F17C 2223/035; F17C 2225/0123; F17C 2225/036;
F17C 2227/0164; F17C 2250/032;
F17C 2250/0439; F17C 2250/0473;
F17C 2250/0495; F17C 2250/0626;
F17C 2250/0694; F17C 2260/021; F17C 2260/022;

(Forts.)

(86) Internationale Anmeldenummer:
**PCT/EP2019/086005**

(87) Internationale Veröffentlichungsnummer:
**WO 2020/127520 (25.06.2020 Gazette 2020/26)**

(54) **VERFAHREN ZUM EINSPEICHERN EINES MEDIUMS IN EINE DRUCKSPEICHEREINRICHTUNG**

METHOD FOR STORING A MEDIUM IN A PRESSURE ACCUMULATOR DEVICE

PROCÉDÉ DE STOCKAGE D'UN FLUIDE DANS UN DISPOSITIF DE STOCKAGE SOUS PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2018 DE 102018133199**

(43) Veröffentlichungstag der Anmeldung:
**27.10.2021 Patentblatt 2021/43**

(73) Patentinhaber: **HPS Home Power Solutions AG 12489 Berlin (DE)**

(72) Erfinder:
• LEVERENZ, Hendrik
  **12053 Berlin (DE)**
• REUTER, Wilma
  **12049 Berlin (DE)**
• WIEMANN, Johannes
  **10963 Berlin (DE)**

(74) Vertreter: **Müller, Thomas Boschetsrieder Straße 20 81379 München (DE)**

(56) Entgegenhaltungen:
EP-A2- 1 593 905 US-A1- 2015 308 621
US-A1- 2016 273 710 US-A1- 2016 305 611

(52) Gemeinsame Patentklassifikation (CPC): (Forts.)
F17C 2270/0168; F17C 2270/0184; F17C 2270/07;
Y02E 60/32; Y02E 60/50

**Beschreibung**

Die vorliegende Erfindung betrifft zunächst ein Verfahren zum Einspeichern eines Mediums, insbesondere eines Gases, in eine Druckspeichereinrichtung gemäß dem Patentanspruch 1. Weiterhin betrifft die Erfindung auch eir Computerprogrammprodukt, eine Steuereinrichtung sowie ein Energiesystem, gemäß den Ansprüchen 10-12.

Es ist bereits seit langem bekannt und auf unterschiedlichste Weise realisiert, dass Medien, insbesondere gasförmige Medien, in Speichereinrichtungen gespeichert werden, bei denen es sich um so genannte Druckspeichereinrichtungen handelt. Bei der Speicherung von Wasserstoff beispielsweise kann dieser mit Drücken bis zu 700 bar in der Druckspeichereinrichtung eingespeichert werden beziehungsweise sein. In solchen Fällen spricht man bei der Druckspeichereinrichtung von einer Hochdruckspeichereinrichtung.

Eine Herausforderung bei der Speicherung von Medien in Druckspeichereinrichtungen besteht insbesondere darin, dass bestimmte Druckwerte innerhalb der Druckspeichereinrichtung nicht überschritten werden dürfen, damit eine Beschädigung der Druckspeichereinrichtung ausgeschlossen werden kann. Häufig besteht gleichzeitig das Bedürfnis, in der Druckspeichereinrichtung so viel Medium wie möglich einspeichern zu können. Dies ist insbesondere dann der Fall, wenn es sich bei dem Medium um einen Brennstoff handelt, beispielsweise für den Betrieb eines Fahrzeugs oder für den Betrieb eines Energiesystems.

Der Druck in Druckspeichersystemen schwankt in Abhängigkeit der Temperatur, beispielsweise der Umgebungstemperatur und/oder der Speichertemperatur. Dabei verhält sich ein temperaturbedingter Druckanstieg proportional. Das heißt, der Temperatureinfluss ist, absolut gesehen, bei hohen Drücken größer als bei geringen Drücken. Die Druckspeichereinrichtung, ebenso wie die druckführenden Komponenten in deren Peripherie haben in der Regel einen Betriebsdruck, bei dem es sich um den maximal zulässigen Speicherdruck handelt, der aus den vorgenannten Gründen nicht überschritten werden darf.

Gegebenenfalls existieren zusätzlich auch noch Sicherheitseinrichtungen, die einen Überdruck, beispielsweise das 1.1-fache des Betriebsdrucks, absichern. Bei einer Druckspeichereinrichtung mit einem Betriebsdruck von 300 bar läge ein solcher Überdruck dann beispielsweise bei 330 bar.

Zur Verdeutlichung der vorliegenden Erfindung wird diese im Folgenden häufiger im Zusammenhang mit einem Ausführungsbeispiel beschrieben, bei dem in einer Druckspeichereinrichtung ein Medium, insbesondere ein Gas, mit einem Druck bis zu 300 bar eingespeichert wird. Die Erfindung ist jedoch nicht auf diese konkrete Ausführungsform beschränkt

Dies soll anhand eines Ausgangsbeispiels verdeutlicht werden. Liegt der Betriebsdruck einer als Hochdruckspeichereinrichtung ausgebildeten Druckspeichereinrichtung beispielsweise bei 300 bar, kann es auf Grund von täglichen und/oder saisonalen Temperaturänderungen zu einem entsprechenden Überdruck kommen. Liegt in einem bestimmten Zeitraum, beispielsweise im Frühjahr und/oder bei Nacht, die Einspeichertemperatur beispielsweise bei 10°C, und wird für diese Temperatur der Speicherdruck, das heißt der Betriebsdruck, beispielsweise auf 300 bar festgesetzt, und liegt dann in einem anderen Zeitraum, beispielsweise im Sommer und/oder bei Tag, die Einspeichertemperatur beispielsweise bei 40°C, würde der entsprechende tatsächliche Speicherdruck beispielsweise bei 342 bar liegen. Das entspricht einem Wert von größer 10% im Vergleich zum maximal zulässigen Überdruck. Im umkehrten Fall ergibt sich ein anderes Bild. Liegt in einem bestimmten Zeitraum, beispielsweise im Sommer und/oder bei Tag, die Einspeichertemperatur beispielsweise bei 40°C, und wird für diese Temperatur der Betriebsdruck beispielsweise auf 300 bar festgesetzt, und liegt in einem anderen Zeitraum, beispielsweise im Frühjahr und/oder bei Nacht, die Einspeichertemperatur dann beispielsweise bei 10°C, würde der entsprechende Speicherdruck beispielsweise nur bei 263 bar liegen. Im letztgenannten Fall bleibt deshalb Speicherkapazität ungenutzt.

Wie schon erwähnt wurde, können derartige Druckspeichereinrichtungen, beispielsweise Hochdruckspeichereinrichtungen, in unterschiedlichen Systemen und Einrichtungen verwendet werden, beispielsweise in Fahrzeugen oder in Energiesystemen. Mit Energiesystemen wird üblicherweise Energie für verschiedenste Anwendungsgebiete erzeugt und bereitgestellt.

Bei einer bekannten Art solcher Energiesysteme wird in einer ersten Energiequelle ein Medium, insbesondere ein gasförmiges Medium, erzeugt. Bei dem erzeugten Medium kann es sich beispielsweise um Wasserstoff handeln. Der Wasserstoff wird beispielsweise mittels Elektrolyse erzeugt und in einer zweiten Energiequelleneinrichtung, bei der es sich beispielsweise um eine Druckspeichereinrichtung, insbesondere eine Hochdruckspeichereinrichtung, handelt, gespeichert. Die Speicherung des Wasserstoffs erfolgt nicht selten mit hohen Drücken bis 700 bar. Bei der vorgenannten Prozedur handelt es sich beispielsweise um eine erste Betriebsweise des Energiesystems. Während des Betriebs des Energiesystems wird der Wasserstoff aus der Druckspeichereinrichtung ausgespeichert und in einer ersten Energiesenkeneinrichtung verbraucht. Hierbei handelt es sich beispielsweise um eine zweite Betriebsweise des Energiesystems. Bei einer solchen ersten Energiesenkeneinrichtung handelt es sich beispielsweise um eine Brennstoffzelleneinrichtung. Üblicherweise sind die vorbeschriebenen Komponenten des Energiesystem räumlich voneinander getrennt und über eine Verbindungsleitungseinrichtung miteinander verbunden. Beide vorgenannten Betriebsweisen bedürfen üblicherweise eines unterschiedlichen Druckniveaus. Während in der ersten Betriebsweise mit der Elektrolyse beispielsweise Drücke von 20 bis 60 bar vorherrschen, sind für den Betrieb der Brennstoffzelleneinrichtung in der zweiten Betriebsweise Drücke von beispielsweise kleiner 20 bar erforderlich.

Um dem weiter oben geschilderten Problem zu begegnen, dass aufgrund der herrschenden Temperatur das Medium mit einem Druck oberhalb des Betriebsdrucks in der Druckspeichereinrichtung gespeichert wird, was die Gefahr eine Beschädigung oder Zerstörung der Druckspeichereinrichtung nach sich ziehen kann, ist es beispielsweise bekannt, die Druckspeichereinrichtung gegenüber den druckerzeugenden Komponenten, beispielsweise einer Kompressoreinrichtung, in ausreichender Weise überzudimensionieren. Diese Lösung ist jedoch teuer und aufwändig. Anders könnte man beispielsweise vorgehen, indem man, auf das Beispiel von oben zurückkommend, dem Betriebsdruck eine ausreichend hohe statische Referenztemperatur für die Druckspeichereinrichtung zuordnet, bei der der Betriebsdruck in der Druckspeichereinrichtung bei 300 bar liegen soll.

Typischerweise wird der Betriebsdruck, das heißt der maximale Speicherdruck, bis zu dem das Einspeichern in die Druckspeichereinrichtung erfolgen darf, vom Hersteller der Druckspeichereinrichtung festgelegt, und zwar für eine definierte, vorgegebene statische Referenztemperatur. Auf das obige Beispiel zurückkommend wird vom Hersteller beispielsweise festgelegt, dass eine Druckspeichereinrichtung für einen Betriebsdruck von 300 bar ausgelegt und damit zugelassen ist, wobei dieser Betriebsdruck für eine definierte, statische Referenztemperatur, beispielsweise 15°C, festgelegt ist. Dieser Betriebsdruck, bei dem es sich um einen statischen Betriebsdruck handelt, wird dann später für die Einspeicherung von Medium, beispielsweise von Gas, in die Druckspeichereinrichtung verwendet, indem die Einspeicherung von Medium in die Druckspeichereinrichtung zu jeder Zeit nur bis zu diesem festgelegten Betriebsdruck möglich ist. Wie man aus dem Beispiel weiter oben ersieht, führt dies aber zu dem Nachteil, dass die Druckspeichereinrichtung nicht selten oberhalb des Betriebsdrucks, oder aber auch unterhalb ihrer möglichen Kapazität arbeitet, was ebenfalls von Nachteil ist.

Aus der DE 10 2016 203 336 A1 ist eine Lösung bekannt, bei der in Abhängigkeit von der Temperatur der Druckspeichereinrichtung oder eines darin befindlichen Gases der aktuell für die Druckspeichereinrichtung mögliche Maximaldruck bestimmt wird. Die Füllmenge an Gas ergibt sich dann aus dem jeweils ermittelten temperaturabhängigen Maximaldruck. Die Messung der Temperatur erfolgt dabei mit einer Anzahl von Temperatursensoren. Nachteilig bei dieser bekannten Lösung ist, dass es nicht immer möglich ist, temporäre Überdrücke zu vermeiden.

US2016273710A1 betrifft ein Verfahren zum Tanken von Gas in einen unter Druck stehenden Gasbehälter.

Der vorliegenden Erfindung liegt die Aufgabe zugrunde, eine Lösung bereitzustellen, mittels derer die vorgenannten Nachteile vermieden werden. Insbesondere soll bei geringem konstruktivem Aufwand ein bezüglich des Speicherdrucks, insbesondere des Betriebsdrucks, dynamisches Einspeichern von Medium, insbesondere von Wasserstoff, in der Druckspeichereinrichtung ermöglicht werden, wobei insbesondere das Entstehen von Überdrücken vermieden wird.

Diese Aufgabe wird erfindungsgemäß gelöst durch das Verfahren mit den Merkmalen gemäß dem unabhängigen Patentanspruch 1, welches den ersten Aspekt der Erfindung darstellt, durch das Computerprogrammprodukt mit den Merkmalen gemäß dem unabhängigen Patentanspruch 10, welches den zweiten Erfindungsaspekt darstellt, durch die Steuereinrichtung mit den Merkmalen gemäß dem unabhängigen Patentanspruchs 11, welche den dritten Aspekt der Erfindung darstellt, sowie durch das Energiesystem mit den Merkmalen gemäß dem unabhängigen Patentanspruch 12, welches den vierten Aspekt der Erfindung darstellt.

Weitere Merkmale und Details der Erfindung ergeben sich aus den Unteransprüchen, der Beschreibung sowie den Zeichnungen. Dabei gelten Merkmale und Details, die im Zusammenhang mit einem der Erfindungsaspekte offenbart sind, vollumfänglich auch im Zusammenhang mit den jeweils anderen Erfindungsaspekten, und umgekehrt, so dass hinsichtlich der Offenbarung der einzelnen Erfindungsaspekte stets vollinhaltlich auch Bezug auf die jeweils anderen Erfindungsaspekte genommen und auf diese verwiesen wird.

Gemäß der vorliegenden Erfindung wird das Einspeichern von Medium, insbesondere Gas, bevorzugt Wasserstoff, in Abhängigkeit von eine prognostizierten Temperatur, der Referenztemperatur, und optional zusätzlich auch noch von einer ermittelten aktuellen Temperatur, bei der es sich beispielsweise um die Umgebungs-IDruckspeichereinrichtungstemperatur handelt, geregelt. Schädliche Überdrücke durch hohe Temperaturen werden verhindert, zumindest aber minimiert. Der Betriebsdruck wird für die Speicheranwendung maximal ausgenutzt.

Der grundlegende Gedanke der vorliegenden Erfindung besteht in einem dynamischen Referenztemperatur-Verfahren mit zeitbezogener Abhängigkeit. Das Einspeichern von Medium in der Druckspeichereinrichtung wird in Abhängigkeit einer Referenztemperatur geregelt.

Mit der vorliegenden Erfindung lassen sich eine Reihe von Vorteilen realisieren. So können temperaturinduzierte Überdruckzustände in der Druckspeichereinrichtung vermieden zumindest aber minimiert werden. Es ist keine Überdimensionierung der Druckspeichereinrichtung oder von deren Peripheriekomponenten erforderlich. Gleichzeitig ist jedoch eine Maximierung der gespeicherten Energie vor der Verbrauchsphase gewährleistet.

Die vorliegende Erfindung ist insbesondere gerichtet auf ein Verfahren zum Einspeichern eines Mediums in einer Druckspeichereinrichtung. Dabei ist die Erfindung nicht auf bestimmte Speichermedien beschränkt. Bevorzugt dient die Druckspeichereinrichtung zum Eispeichern eines Gases. Im Folgenden wird die Erfindung oftmals anhand eines Ausführungsbeispiels erläutert, bei dem Wasserstoff gespeichert wird. Jedoch ist die Erfindung nicht auf dieses eine konkrete Speichermedium beschränkt.

Das Medium wird in einer Druckspeichereinrichtung zumindest zeitweilig gespeichert und während dieser Speicherzeit in der Druckspeichereinrichtung gelagert. Zum Zwecke des Verbrauchs wird das gespeicherte Medium aus der Druckspeichereinrichtung ausgespeichert, das heißt entnommen. Die Druckspeichereinrichtung übernimmt insbesondere die Funktion eines Speichertanks. Die Erfindung ist nicht auf bestimmte Arten von Druckspeichereinrichtungen beschränkt. In einer bevorzugten Ausführungsform handelt es sich bei der Druckspeichereinrichtung um eine Hochdruckspeichereinrichtung, bei der das Medium beispielsweise bis zu einem Druck von 700 bar eingespeichert wird.

Eine solche Druckspeichereinrichtung kann in unterschiedlichen Anwendungen eingesetzt werden, beispielsweise in Fahrzeugen oder dergleichen. In einer bevorzugten Ausführungsform erfolgt die Anwendung der Druckspeichereinrichtung in einem Energiesystem, welches insbesondere als ein Hausenergiesystem ausgebildet ist. Zur Verdeutlichung der Erfindung sowie der erfindungsgemäßen Zusammenhänge wird diese nachfolgend insbesondere anhand des letztgenannten Ausführungsbeispiels beschrieben, ohne dass die Erfindung auf diese eine konkrete Anwendung beschränkt ist.

Bei einem solchen Energiesystem handelt es sich insbesondere um ein aus mehreren Komponenten bestehendes Ganzes, wobei die Komponenten miteinander zu einer zweckgebundenen Einheit verbunden sind. Im vorliegenden Fall handelt es sich bei dem Energiesystem um ein System zum Erzeugen beziehungsweise Bereitstellen von Energie, vorzugsweise von elektrischer Energie.

In einer bevorzugten Ausführungsform handelt es sich bei dem Energiesystem um ein Hausenergiesystem. Hausenergiesysteme sind grundsätzlich aus dem Stand der Technik bekannt und dienen der Versorgung von Häusern, beispielsweise von Niedrigenergiehäusern, Passivhäusern oder Nullenergiehäusern, mit Energie in Form von Wärme und insbesondere in Form von Strom, beispielsweise Strom aus regenerativen Energiequellen wie beispielsweise Photovoltaik (PV)-Generatoren oder Kleinwindkraftanlagen. Ein solches Hausenergiesystem schafft die Grundlage dafür, dass der Energiebedarf eines Hauses, insbesondere eines Niedrigenergiehauses, eines Passivhauses oder eines Nullenergiehauses, sowohl hinsichtlich des Strom- als auch des Wärmebedarfs vollständig aus erneuerbaren Energiequellen gedeckt werden kann und somit vollständige $CO_2$-Freiheit im Betrieb besteht. Wenigstens aber kann der Strombedarf eines Hauses im Sinne einer anzustrebenden Eigenverbrauchserhöhung nahezu vollständig aus erneuerbaren Energiequellen, insbesondere mittels eines PV-Generators und/oder einer Kleinwindenergieanlage, gedeckt werden.

Ein solches Hausenergiesystem ist beispielsweise in den Patentanmeldungen WO 2017/089468 A1 und WO 2017/089469 A1 der Anmelderin offenbart und beschrieben.

Gemäß einer bevorzugten Ausführungsform weist ein Hausenergiesystem der genannten Art die folgenden Grundmerkmale auf:

- einen DC-Einspeisepunkt, bevorzugt ausgebildet für eine Nenn-Spannung von 48 Volt, und/oder einem AC-Einspeisepunkt, bevorzugt ausgebildet für eine Spannung von 230 Volt oder 110 Volt, wobei der DC-Einspeisepunkt und/oder der AC-Einspeisepunkt im Betrieb zumindest zeitweise mit einem elektrischen Verbraucher, der eine Verbrauchs-Leistung aufweist, verbunden ist,
- einen elektrisch mit dem DC-Einspeisepunkt wenigstens zeitweise verbundenen PV-Generator zum Erzeugen einer elektrischen PV-Leistung,
- eine elektrisch mit dem DC-Einspeisepunkt oder mit dem AC-Einspeisepunkt wenigstens zeitweise verbundene Brennstoffzelleneinheit zum Erzeugen einer elektrischen Brennstoffzellen-Leistung,
- eine elektrisch mit dem DC-Einspeisepunkt verbundene Elektrolyseeinheit zum Erzeugen von durch die Brennstoffzelleneinheit zu verbrauchendem Wasserstoff, wobei die Elektrolyseeinheit im Betrieb mit einer elektrischen Elektrolyse-Eingangsleistung gespeist wird,
- einen Wasserstofftank, insbesondere als Langzeitenergiespeicher, der mit der Brennstoffzelleneinheit und der Elektrolyseeinheit wenigstens zeitweise fluidverbunden ist und zum Speichern von mittels der Elektrolyseeinheit zu erzeugendem und durch die Brennstoffzelleneinheit zu verbrauchendem Wasserstoff ausgebildet ist,
- eine Speicher-Batterieeinheit, insbesondere als Kurzzeitenergiespeicher, die elektrisch mit dem DC-Einspeisepunkt verbunden oder zu verbinden ist, so dass eine elektrische PV-Leistung und eine elektrische Brennstoffzellen-Leistung in die Speicher-Batterieeinheit eingespeichert werden kann und eine elektrische Elektrolyse-Eingangsleistung und eine Verbrauchs-Leistung aus der Speicher-Batterieeinheit entnommen werden können; und
- ein Steuermodul zum Steuern der Hausenergieanlage.

Gemäß dem ersten Erfindungsaspekt wird ein Verfahren bereitgestellt, welches die Merkmale des unabhängigen Patentanspruchs 1 aufweist.

Das Verfahren betrifft das Einspeichern eines Mediums, insbesondere eines Gases, in eine Druckspeichereinrichtung, insbesondre von Wasserstoff in eine Hochdruckspeichereinrichtung.

Bei der vorliegenden Erfindung wird der Betriebsdruck, bis zu dem Medium in der Druckspeichereinrichtung eingespeichert werden darf, ermittelt, insbesondere berechnet. Der Betriebsdruck ist dabei nicht statisch, das heißt unveränderlich, sondern dynamisch. Das bedeutet, dass sich der Betriebsdruck entwickeln, das heißt verändern kann. Bei dem dynamischen Betriebsdruck handelt es sich erfindungsgemäß um einen veränderlichen Betriebsdruck. Dabei liegt der Fokus bei der vorliegenden Erfindung nicht darauf, dass sich der Betriebsdruck in Abhängigkeit der Temperatur verändert, so wie dies bei der eingangs beschriebenen Lösung zum Stand der Technik der Fall ist. Vielmehr wird mit der vorliegenden Erfindung insbesondere ein dynamischer Betriebsdruck ermittelt, der sich über die Zeit verändert. Dies geschieht bevorzugt automatisch. Bei dem Betriebsdruck handelt es sich im Kontext der vorliegenden Patentanmeldung um denjenigen maximalen Speicherdruck, bis zu dem das Medium in der Druckspeichereinrichtung eingespeichert werden darf.

In einer bevorzugten Ausführungsform läuft das Verfahren in einer Steuereinrichtung ab, beziehungsweise wird in dieser oder mit Hilfe von dieser ausgeführt. Bei der Steuereinrichtung kann es sich beispielsweise um eine eigenständige Steuereinrichtung handeln, die nur für diesen einen Einsatzzweck vorgesehen ist. In anderer bevorzugter Ausgestaltung ist eine solche Steuereinrichtung Bestandteil einer Gesamt-Steuereinrichtung oder aber eine Funktionalität innerhalb einer solchen Gesamt-Steuereinrichtung, mit der das Gesamtsystem, beispielsweise ein Energiesystem, gesteuert wird.

Bevorzugt weist die Steuereinrichtung Hardwarekomponenten oder Softwarekomponenten oder eine Kombination aus Hardware- und Softwarekomponenten auf. Die verschiedenen Komponenten sind zu einem Steuerkreis verbunden. In einer bevorzugten Ausführungsform weist die Steuereinrichtung eine Datenverarbeitungseinrichtung auf, in der das erfindungsgemäße Verfahren abläuft. Die Datenverarbeitungseinrichtung kann eine Speichereinrichtung aufweisen, oder über eine Schnittstelle, die beispielsweise drahtlos oder drahtgebunden sein kann, mit einer Speichereinrichtung verbunden sein. In der Speichereinrichtung sind bevorzugt Informationen wie Daten oder Dateien und/oder Computerprogramme abgelegt, die für die Ausführung des Verfahrens benötigt werden und die im weiteren Verlauf der Beschreibung näher erläutert werden. Insbesondere kann in der Steuereinrichtung ein Computerprogrammprodukt gemäß dem zweiten Erfindungsaspekt weiter unten implementiert sein. Die Steuereinrichtung selbst ist bevorzugt gemäß dem dritten Erfindungsaspekt weiter unten ausgebildet.

Das Verfahren gemäß dem ersten Erfindungsaspekt dient zum Einspeichern eines Mediums, insbesondere eines Gases, bevorzugt von Wasserstoff, in eine Druckspeichereinrichtung. Das grundlegende Merkmal dieses Verfahrens besteht darin, einen dynamischen Betriebsdruck zu ermitteln, welcher von der Temperatur abhängig ist, und bis zu dem das Medium in der Druckspeichereinrichtung eingespeichert wird beziehungsweise werden darf. In einer Abkehr vom Stand der Technik handelt es sich bei dem Betriebsdruck nicht mehr um einen statischen Betriebsdruck, wie er vom Hersteller der Druckspeichereinrichtung vorgegeben ist. Vielmehr wird, damit insbesondere temperaturbedingte Überdrücke in der Druckspeichereinrichtung vermieden werden können, ein dynamischer, das heißt ein sich verändernder Betriebsdruck ermittelt. Gemäß dem erfindungsgemäßen Verfahren wird dieser dynamische Betriebsdruck vorzugsweise berechnet. Dies wird anhand eines bevorzugten Ausführungsbeispiels weiter unten näher erläutert.

Das Verfahren ist erfindungsgemäß dadurch gekennzeichnet, dass der dynamische Betriebsdruck anhand definierter dynamischer Referenztemperaturwerte mit zeitbezogener Abhängigkeit ermittelt, insbesondere berechnet, wird. Zusätzlich können noch Sicherheitseinrichtungen existieren, die einen oberhalb des Betriebsdrucks liegenden Überdruck, der beispielsweise 10% über dem Betriebsdruck liegen kann, absichern. Hierbei kann es sich beispielsweise um Berstscheiben oder dergleichen handeln. Ein dynamischer Betriebsdruck ist dabei ein solcher Betriebsdruck, der sich von seinem Wert her bewegt, beziehungsweise entwickelt, bevorzugt, der sich ändert. Das bedeutet insbesondere, dass sich der Betriebsdruck zunächst in Abhängigkeit der Temperatur, hier der Referenztemperatur ändert.

Die Ermittlung des dynamischen Betriebsdrucks erfolgt erfindungsgemäß anhand dynamischer Referenztemperaturwerte. Hierbei handelt es sich somit um Temperaturwerte, die sich von ihrem Wert her bewegen, beziehungsweise entwickeln, bevorzugt, die sich ändern, und zwar über die Zeit. Deshalb ist es erfindungsgemäß nicht nur die Temperatur selbst, das heißt die Temperaturhöhe, die ausschlaggeben ist. Vielmehr handelt es sich bei den Referenztemperaturwerten um Temperaturwerte mit einer zeitbezogenen Abhängigkeit. Das bedeutet, dass die Referenztemperaturwerte zeitabhängig, das heißt für bestimmte Zeitpunkte, festgelegt werden beziehungsweise festgelegt sind. Die Referenztemperaturwerte können sich in ihrer Höhe über die Zeit, insbesondere zu bestimmten Zeitpunkten, verändern, so dass die Höhe der Referenztemperaturwerte abhängig von der Zeit ist. Wie dies im Detail aussieht, wird weiter unten näher erläutert.

Erfindungsgemäß wird der dynamische Betriebsdruck anhand der dynamischen Referenztemperaturwerte über die Zeit verändert und/oder eingestellt und/oder angepasst. Das heißt, dass sich der Betriebsdruck zu verschiedenen Zeitpunkten, die im Folgenden auch Zeitwerte genannt werden, verändert oder variiert, wie oben geschildert wurde. Bei den Zeitpunkten handelt es sich entweder um eine bestimmte kurze Zeitspanne, oder aber um einen längeren Zeitraum, beispielsweise ein längeres Zeitintervall. Erfindungsgemäß können gleichzeitig Zeitpunkte mit unterschiedlich langer Zeitdauer zum Einsatz kommen. Insbesondere wird dadurch realisiert, dass der Betriebsdruck zu bestimmten Zeitpunkten einen unterschiedlichen Druckwert aufweist, so dass zu diesen unterschiedlichen Zeitpunkten Medium bis zu jeweils unterschiedlichen Betriebsdrücken in der Druckspeichereinrichtung eingespeichert werden kann. Da der Druckanstieg in der Druckspeichereinrichtung abhängig von der Temperatur ist, werden den verschiedenen Zeitpunkten oder Zeitwerten bestimmte Temperaturwerte, bei denen es sich um die Referenztemperaturwerte handelt, zugeordnet. Der jeweilige dazugehörige Betriebsdruck wird dann anhand dieser bestimmten Temperaturwerte ermittelt, beispielsweise berechnet, was im weiteren Verlauf noch im Detail erläutert wird. Dabei müssen die Referenztemperaturwerte nicht mittels Temperatursensoren erfasst werden.

Bei den Referenztemperaturwerten handelt es sich um definierte Referenztemperaturwerte, das heißt um bestimmte, oder festgelegte Werte. Bei den Referenztemperaturwerten handelt es sich insbesondere nicht um durch Temperatursensoren gemessene Temperaturwerte, sondern bevorzugt um vorgegebene und/oder prognostizierte und/oder kalkulierte Temperaturwerte.

Die dynamischen Referenztemperaturwerte ($T_{ref}$) werden bevorzugt als Funktion der Zeit $T_{ref} = f(t)$ bereitgestellt. In einer bevorzugten Ausführungsform werden die dynamischen Referenztemperaturwerte ($T_{ref}$) mit einer kalendarischen Abhängigkeit $T_{ref} = f(dd:mm:yy)$ bereitgestellt.

In einer bevorzugten Ausführungsform handelt es sich bei der zeitbezogenen Abhängigkeit der dynamischen Referenztemperaturwerte um eine kalendarische Abhängigkeit. Das bedeutet insbesondere, dass die Referenztemperaturwerte nach dem Kalender festgelegt werden und sich insbesondere nach dem Kalender verändern, beispielsweise zu einem im Kalender angegebenen Datum oder Zeitabschnitt oder Zeitintervall entsprechend. Die Festlegung kann beispielsweise für einzelne Tage, und/oder einzelne Wochen und/oder Monate erfolgen. So kann beispielsweise eine Drucküberschreitung in der Druckspeichereinrichtung im Sommer vermieden werden, indem mittels einer entsprechenden Referenztemperatur der Betriebsdruck so reduziert wird, dass es bei einer maximalen Befüllung der Druckspeichereinrichtung auch bei einem Temperaturanstieg nicht zu einem Überdruck kommen kann. Nach dem Sommer führt ein dynamisches Herabsetzen der Referenztemperatur zu einer Erhöhung des berechneten Speicherdrucks beziehungsweise des maximalen Speicherdrucks Ein entsprechendes nachträgliches zusätzliches Einspeichern nach dem Sommer ist so möglich. In der Verbrauchszeit, beispielsweise im Herbst/Winter, ist die Druckspeichereinrichtung maximal beladen/genutzt. In allen Fällen ist jedoch bevorzugt vorgesehen, dass der dynamische Betriebsdruck den vom Hersteller ursprünglich angegebenen statischen Referenzdruck, bis zu welchem die Druckspeichereinrichtung zugelassen ist, nicht übersteigt. Sollten nach der Berechnung des dynamischen Betriebsdrucks theoretisch Betriebsdrücke möglich sein, die über diesem statischen Betriebsdruck liegen, würde die Speicherung von Gas in der Druckspeichereinrichtung bei Erreichen des statischen Betriebsdruckwerts automatisch gestoppt.

Nachdem der dynamische Betriebsdruck ermittelt, insbesondere berechnet wurde, was auf Basis der entsprechenden Referenztemperaturwerte erfolgte, wird das Medium bis maximal zu dem dynamischen Betriebsdruck in die Druckspeichereinrichtung eingespeichert. Wenn der ermittelte dynamische Betriebsdruck größer als der festgelegte statische Betriebsdruck ist, beispielsweise weil eine im Umfeld der Druckspeichereinrichtung ermittelte Temperatur, etwa die Temperatur der Druckspeichereinrichtung oder deren Umgebungstemperatur, größer als die Referenztemperatur ist, dann wird vorzugsweise nur bis zu dem festgelegten statischen Betriebsdruck eingespeichert. Ist der dynamische Betriebsdruck, oder aber wie vorstehend beschrieben der statische Betriebsdruck erreicht, wird das weitere Einspeichern von Medium in der Druckspeichereinrichtung unterbunden. Das kann beispielsweise mittels der Steuereinrichtung erfolgen, die etwa den Betrieb einer entsprechenden Kompressoreinrichtung steuert. Wenn der ermittelte dynamische Betriebsdruck kleiner als der festgelegte statische Betriebsdruck ist, wird das Medium bevorzugt bis zu dem dynamischen Betriebsdruck in die Druckspeichereinrichtung eingespeichert.

Nachfolgend werden einige bevorzugte Ausführungsbeispiele beschrieben, wie der dynamische Betriebsdruck aus den Referenztemperaturwerten ermittelt, insbesondere berechnet wird.

In einer ersten bevorzugten Ausführungsform ist es ausreichend, wenn nur die Referenztemperaturwerte mit zeitbezogener Abhängigkeit vorhanden sind. Zu diesen Referenztemperaturwerten werden dann entsprechende dynamische Betriebsdrücke ermittelt. Beispielsweise könnten den sich über die Zeit verändernden Referenztemperaturwerten geeignete Betriebsdruckwerte zugeordnet sein, etwa geringere Betriebsdruckwerte für den Sommer und höhere Betriebsdruckwerte für den Winter. Wird dann systemseitig ein bestimmter Zeitpunkt ermittelt, wird Medium nur bis zu dem, dem bestimmten Zeitpunkt zugeordneten Referenztemperaturwert und diesem wiederum zugeordneten Betriebsdruckwert eingespeichert. Ein solche Ausgestaltung ist einfach umsetzbar. Allerdings geschieht dies auf Kosten der Flexibilität.

In einer anderen bevorzugten Ausführungsform werden zur Bestimmung des dynamischen Betriebsrucks zusätzlich auch noch die tatsächlich herrschenden Temperaturverhältnisse, denen die Druckspeichereinrichtung ausgesetzt ist, mit einbezogen. Bevorzugt wird in einem solchen Fall der dynamische Betriebsdruck ermittelt, indem in Bezug auf die Druckspeichereinrichtung Temperaturwerte ermittelt werden, und indem die ermittelten Temperaturwerte in Bezug zu den definierten dynamischen Referenztemperaturwerten gesetzt werden.

Als ermittelte Temperaturwerte können bevorzugt Werte der Umgebungstemperatur der Druckspeichereinrichtung und/oder Temperaturwerte der Druckspeichereinrichtung bereitgestellt werden. Diese Temperaturwerte werden bevorzugt über geeignete Temperatursensorweinrichtungen ermittelt, beispielsweise gemessen oder auf andere Weise hergeleitet. Temperatursensoreinrichtungen können zu solchen Zwecken beispielsweis im Umgebungsbereich der Druckspeichereinrichtung und/oder aber an und/oder in der Druckspeichereinrichtung angeordnet sein.

In bevorzugter Weiterbildung wird der der dynamische Betriebsdruck ($P_{dyn}$) ermittelt, indem dieser nach der folgenden Formel berechnet wird

$$P_{dyn} = P_{stat} \times (T_{amb} / T_{ref}).$$

In diese Formel steht $P_{dyn}$ für den zu ermittelnden, insbesondere zu errechnenden dynamischen Betriebsdruck, $P_{stat}$ für den statischen Betriebsdruck, der vom Hersteller der Druckspeichereinrichtung festgelegt ist und bis zu dem eine Speicherung von Medium in der Druckspeichereinrichtung zugelassen ist, $T_{amb}$ für einen ermittelten Temperaturwert in Form der Umgebungstemperatur und/oder der Druckspeichertemperatur, sowie $T_{ref}$ um den definierten dynamischen Referenztemperaturwert mit zeitbezogener Abhängigkeit.

In einer bevorzugten Ausführungsform wird der dynamische Betriebsdruck ermittelt, indem im Verlauf des Verfahrens bei zwei oder mehr voneinander unterschiedlichen Zeitwerten, die insbesondere ermittelt werden, zu jedem Zeitwert ein Referenztemperaturwert ermittelt wird. Die Zeitwerte können beispielsweise beim Betrieb der Druckspeichereinrichtung ermittelt werden, die in der Regel Bestanteil eines größeren Systems ist, beispielsweise eines Energiesystems gemäß dem vierten Erfindungsaspekt. Beispielsweise kann der Druckspeichereinrichtung eine entsprechende Timer-Einrichtung zugeordnet sein. Diese Timer-Einrichtung kann bevorzugt Bestanteil der Steuereinrichtung sein. Die Timer-Einrichtung hat insbesondere die Funktion, Zeitwerte zu ermitteln und dem System bereitzustellen. Dies geschieht beispielsweise mittels einer so genannten Zeit-Funktion oder Zeitabfolge-Funktion, mit der, insbesondere kalendarische, Zeitpunkte, aber auch Zeitintervalle, ermittelt werden können.

Zu jedem Zeitwert wird dann der dynamische Betriebsdruck anhand der ermittelten Referenztemperaturwerte ermittelt, vorzugsweise berechnet, insbesondere verändert und/oder eingestellt und/oder angepasst.

In einer bevorzugten Ausführungsform kann dieser Verfahrensablauf wie folgt umgesetzt werden. In einer Vergleichsdatei, die bevorzugt in Form einer Vergleichstabelle ausgebildet ist, sind eine Reihe von Referenzzeitwerten abgelegt. Hierbei kann es sich beispielsweise um einzelne Tage handeln, oder aber um einzelne Wochen und/oder Monate, aber auch um Zeitintervalle bestehend aus mehreren der vorgenannten Zeitwerte. Die Vergleichsdatei kann dabei je nach Bedarf und Anwendungsfall beliebig komplex und feinunterteilt beziehungsweise grobunterteilt ausgebildet sein. In der Vergleichsdatei ist jedem Referenzzeitwert ein bestimmter Referenztemperaturwert zugeordnet. Die Vergleichsdatei ist vorzugsweise eine solche Datei, die vor Beginn des Verfahrens angelegt wurde, und die beispielsweise in einer Speichereinrichtung abgelegt ist, die Bestandteil einer Steuereinrichtung ist, oder auf die die Steuereinrichtung zumindest zeitweilig zugreift. Je nach Bedarf soll es möglich sein, die Werte in der Vergleichsdatei, etwa die Referenzzeitwerte und/oder die Referenztemperaturwerte, von außerhalb verändern zu können. Die im Verlauf des Verfahrens betrachteten, insbesondere ermittelten, Zeitwerte werden mit den Referenzzeitwerten in der Vergleichsdatei verglichen, was beispielsweise mittels einer entsprechenden Komparatoreinrichtung erfolgt. Wird eine Übereinstimmung eines Zeitwerts mit einem Referenzzeitwert festgestellt, wird anhand des dem entsprechenden Referenzzeitwert zugeordneten Referenztemperaturwerts der Betriebsdruck ermittelt, vorzugsweise berechnet, insbesondere verändert und/oder eingestellt und/oder angepasst, bis zu dem das Medium in der Druckspeichereinrichtung eingespeichert werden darf.

Gemäß dem zweiten Aspekt der Erfindung wird ein Computerprogrammprodukt bereitgestellt, welches die Merkmale des unabhängigen Patentanspruchs 11 aufweist. Das Computerprogrammprodukt befähigt eine Datenverarbeitungseinrichtung, sobald das Computerprogrammprodukt in der Datenverarbeitungseinrichtung ausgeführt wird, und vorzugsweise in einer Speichereinrichtung der Datenverarbeitungseinrichtung gespeichert ist, das vorstehend beschriebene Verfahren gemäß dem ersten Erfindungsaspekt auszuführen. Aus diesem Grund wird zur Vermeidung von Wiederholungen an dieser Stelle vollinhaltlich auf die Ausführungen zum ersten Erfindungsaspekt Bezug genommen und verwiesen.

Gemäß dem dritten Aspekt der Erfindung wird eine Steuereinrichtung bereitgestellt, welche die Merkmale des unabhängigen Patentanspruchs 12 aufweist. Die Steuereinrichtung, bei der es sich insbesondere im eine wie weiter oben beschriebene Steuereinrichtung handelt, ist bereitgestellt, um die Speicherung eines Mediums in einer Druckspeichereinrichtung zu steuern. Dabei ist die Steuereinrichtung in einer ersten Ausführungsform derart ausgebildet, dass sie in der Lage ist, das Verfahren gemäß dem ersten Aspekt der Erfindung auszuführen. Alternativ oder zusätzlich ist die Steuereinrichtung in einer anderen Ausführungsform derart ausgebildet, dass die Steuereinrichtung eine Datenverarbeitungseinrichtung oder eine Schnittstelle zu einer externen Datenverarbeitungseinrichtung aufweist, wobei ein Computerprogrammprodukt gemäß dem zweiten Erfindungsaspekt in der Datenverarbeitungseinrichtung ausgeführt wird. Aus diesem Grund wird zur Vermeidung von Wiederholungen an dieser Stelle vollinhaltlich auf die Ausführungen zum ersten Erfindungsaspekt sowie zum zweiten Erfindungsaspekt Bezug genommen und verwiesen.

Gemäß dem vierten Aspekt der Erfindung wird ein Energiesystem bereitgestellt, welches die Merkmale des unabhängigen Patentanspruchs 13 aufweist. Bevorzugt wird das Verfahren des ersten Erfindungsaspekts in dem Energiesystem gemäß dem vierten Erfindungsaspekt ausgeführt, so dass das Energiesystem Mittel zur Durchführung des Verfahrens gemäß dem ersten Erfindungsaspekt aufweist. Hinsichtlich der Ausgestaltung und Funktionsweise des Energiesystems wird zur Vermeidung von Wiederholungen an dieser Stelle vollinhaltlich auch auf die Ausführungen zum ersten Erfindungsaspekt Bezug genommen und verwiesen. Ebenso kann das Computerprogrammprodukt gemäß dem zweiten Erfindungsaspekt sowie die Steuereinrichtung gemäß dem dritten Erfindungsaspekt Bestandteil des Energiesystems sein, so dass auch auf diese entsprechenden Ausführungen vollinhaltlich Bezug genommen und verwiesen wird.

Das Energiesystem weist in seiner einfachsten Ausgestaltung wenigstens eine Energiequelleneinrichtung zum Erzeugen eines Mediums sowie eine davon räumliche getrennte Druckspeichereinrichtung zum Speichern des erzeugten Mediums auf. In einer bevorzugten Ausführungsform weist das Energiesystem eine erste Energiequelleneinrichtung, die als Elektrolyseeinrichtung, insbesondere zur Herstellung von Wasserstoff ausgebildet ist, und eine erste Energiesenkeneinrichtung, die als Brennstoffzelleneinrichtung ausgebildet ist, und eine zweite Energiequelleneinrichtung, die als Druckspeichereinrichtung, insbesondre zur Speicherung von Wasserstoff ausgebildet ist, und eine zweite Energiesenkeneinrichtung, die als Mitteldruckspeichereinrichtung, insbesondere zur Zwischenspeicherung von Wasserstoff ausgebildet ist, auf.

Die vorliegende Erfindung lässt sich grundsätzlich auf alle Systeme, insbesondere Speichersysteme, anwenden, bei denen das Ein- und Ausspeichern durch saisonale Temperatureinflüsse beeinflusst wird.

Die Erfindung wird nun anhand eines Ausführungsbeispiels unter Bezugnahme auf die beiliegenden Zeichnungen näher erläutert. Es zeigen

Figur 1   in schematischer Ansicht ein Energiesystem 10, in dem das erfindungsgemäße Verfahren ausführbar ist; und

Figur 2   ein Beispiel für eine Vergleichsdatei in Form einer Vergleichstabelle, die bei dem erfindungsgemäßen Verfahren zum Einsatz kommt.

Das Energiesystem 10 wird im Ausführungsbeispiel als Hausenergiesystem eingesetzt. In dem Energiesystem 10 wird unter anderem das erfindungsgemäße Verfahren zum Einspeichern eines Mediums ausgeführt. Zunächst wird der grundsätzliche Aufbau des Energiesystems beschrieben. Anschließend wird der Ablauf des Verfahrens erläutert.

Das Energiesystem 10 weist zunächst ein erstes Untersystem 20 auf, welches als Innensystem ausgebildet ist. Das bedeutet, dass sich das erste Untersystem 20 innerhalb des Hauses befindet. Zusätzlich weist das Energiesystem 10 ein zweites Untersystem 30 in Form eines Außensystems auf. Das bedeutet, dass sich das zweite Untersystem 30 außerhalb des Hauses befindet.

Das erste Untersystem 20 weist eine erste Energiequelleneinrichtung 21 auf, bei der es sich um eine Elektrolyseeinrichtung zur Herstellung von Wasserstoff handelt. Zudem weist das erste Untersystem 20 eine erste Energiesenkeneinrichtung 22 auf, bei der es sich um eine Brennstoffzelleneinrichtung handelt.

Das zweite Untersystem 30 weist eine zweite Energiequelleneinrichtung auf, bei der es sich um eine Druckspeichereinrichtung 31, insbesondere um eine Hochdruckspeichereinrichtung, handelt. In der Druckspeichereinrichtung 31 wird der erzeugte Wasserstoff bei bis zu 700 bar gespeichert. Zusätzlich verfügt das zweite Untersystem 30 über eine zweite Energiesenkeneinrichtung 32 in Form einer Mitteldruckspeichereinrichtung, in der der erzeugte Wasserstoff bei Drücken zwischen 20 und 60 bar zwischengespeichert wird, bevor er von dort endgültig.in der Druckspeichereinrichtung 31 gespeichert wird.

Die einzelnen Komponenten des Energiesystems 10 sind über eine Verbindungsleitungseinrichtung 40 miteinander verbunden, die aus einer Anzahl von Leitungsabschnitten besteht. Wenigstens ein Leitungsabschnitt 40a ist dabei als so genannter bidirektionaler Leitungsabschnitt ausgebildet. Das bedeutet, dass der Leitungsabschnitt 40a während des Betriebs des Energiesystems 10 bidirektional genutzt und in beiden Richtungen durchströmt wird. In dem dargestellten Ausführungsbeispiel verbindet der bidirektionale Leitungsabschnitt 40a die Komponenten des ersten Untersystems 20 mit den Komponenten des zweiten Untersystems 30.

Die erste Energiequelleneinrichtung 21 ist über eine Ventileinrichtung 23 an der Verbindungsleitungseinrichtung 40 angebunden. Die erste Energiesenkeneinrichtung 22 ist über eine Ventileinrichtung 24 an der Verbindungsleitungseinrichtung 40 angebunden. Bei den Ventileinrichtungen 23, 24 handelt es sich bevorzugt um Sperrventile, beispielsweise um Magnetventile.

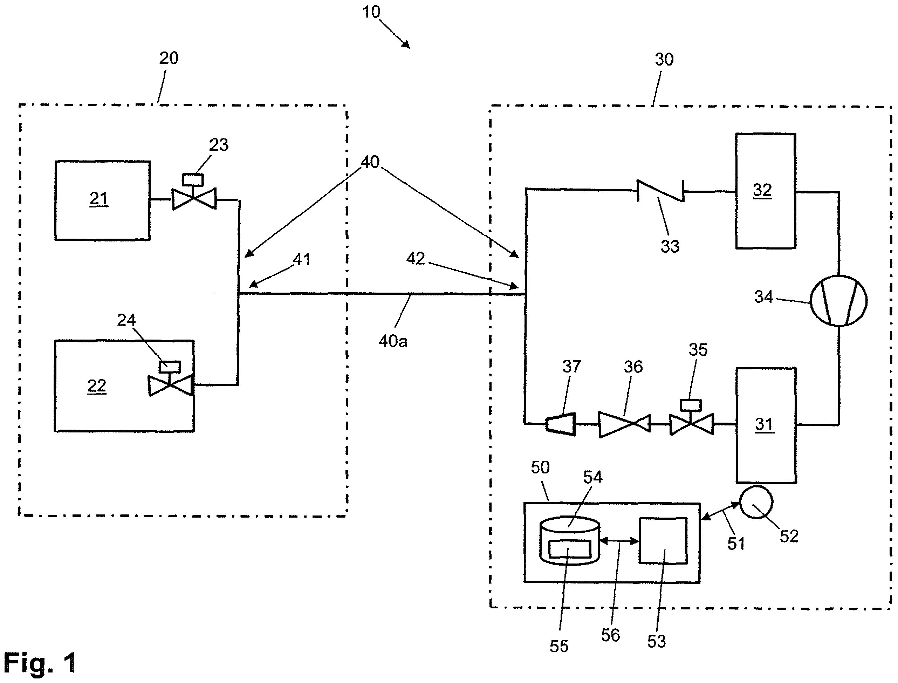

Wie in der Figur 1 dargestellt ist, sind die erste Energiequelleneinrichtung 21 und die erste Energiesenkeneinrichtung 22 auf einer ersten Seite 41 des bidirektionalen Leitungsabschnitts 40a angeordnet, während die Druckspeichereinrichtung 31 und die zweite Energi4senkeneinrichtung 32 auf einer zweiten Seite 42 des bidirektionalen Leitungsabschnitts 40a angeordnet sind.

Der in der ersten Energiequelleneinrichtung 21 mittels Elektrolyse hergestellte Wasserstoff verlässt die erste Energiequelleneinrichtung 21 über die Verbindungsleitungseinrichtung 40 und strömt insbesondere über den bidirektionalen Leitungsabschnitt 40a in das zweite Untersystem 30 und dort über eine Rückschlagventileinrichtung 33 in die als Mitteldruckspeicher fungierende zweite Energiesenkeneinrichtung 32. Die zweite Energiesenkeneinrichtung 32 dient als Zwischenspeicher für den Wasserstoff.

Über eine Kompressoreinrichtung 34, die insbesondere in Form eines Kolbenkompressors vorliegt, wird der in der zweiten Energiesenkeneinrichtung 32 zwischengespeicherte Wasserstoff in der Druckspeichereinrichtung 31, bei der es sich insbesondere um eine Hochdruckspeichereinrichtung handelt, eingespeichert. Über die Kompressoreinrichtung 34 wird der Wasserstoff so weit komprimiert, dass er mit Drücken von bis zu 700 bar in der Druckspeichereinrichtung 31 eingespeichert werden kann.

Der in der Druckspeichereinrichtung 31 gespeicherte Wasserstoff wird für den Betrieb der ersten Energiesenkeneinrichtung 22 in Form der Brennstoffzelleneinrichtung verwendet. Die Brennstoffzelleneinrichtung kann beispielsweise aber nur bei Drücken kleiner 20 bar arbeiten. Deshalb wird der in der Druckspeichereinrichtung 31 gespeicherte Wasserstoff aus der Druckspeichereinrichtung 31 entnommen, über eine Ventileinrichtung 35 geführt, bei der es sich um ein Sperrventil, insbesondere um ein Magnetventil handeln kann, und einer Entspannungseinrichtung 36 in Form eines Druckminderers zugeführt. Anschließend kann der Wasserstoff insbesondere noch eine Durchflussbegrenzungseinrichtung 37 durchströmen, die bevorzugt als eine Einrichtung zur Leitungsquerschnittreduzierung ausgebildet ist. Von dort wird der druckreduzierte Wasserstroff über die Verbindungsleitungseinrichtung 40, und hier insbesondere auch über den bidirektionalen Leitungsabschnitt 40a der ersten Energiesenkeneinrichtung 22 in Form der Brennstoffzelleneinrichtung zugeführt und dort verbraucht.

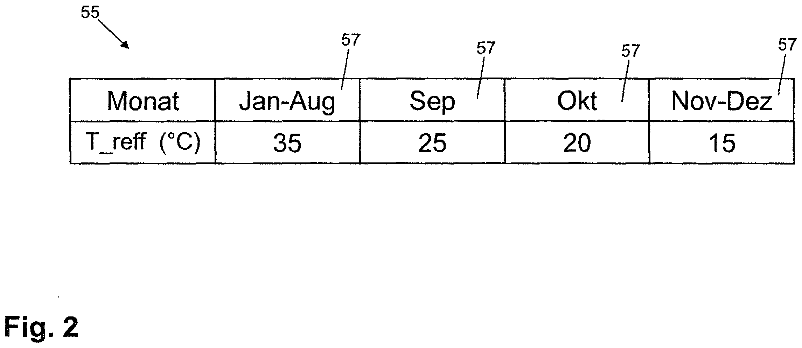

Zur Messung der Umgebungstemperatur ist der Druckspeichereinrichtung 31 eine entsprechende Temperaturmesseinrichtung 52 zugeordnet. Über eine Schnittstelle 51 werden die erfassten Temperaturwerte der Temperaturmesseinrichtung 52 an eine Steuereinrichtung 50 übertragen, in der und mit der das erfindungsgemäße Verfahren ausgeführt wird. Dazu verfügt die Steuereinrichtung 50 über eine Datenverarbeitungseinrichtung 53, die über eine Datenaustauschverbindung 56 mit einer Speichereinrichtung 54 verbunden ist. In der Speichereinrichtung 54 ist eine Vergleichsdatei in Form einer Vergleichstabelle 55 abgelegt, die in Figur 2 dargestellt ist.

Das in der Figur 1 dargestellte Energiesystem 10 stellt einen Teilbereich eines Gesamt-Hausenergiesystems dar, bei dem es sich um ein elektrisch autarkes und vollständig auf erneuerbaren Energien beruhendes multihybrides Hausenergiespeichersystem handelt.

Das multihybride Hausenergiespeichersystem ermöglicht es, die von einer Photovoltaik (PV)-Anlage, einer Kleinwindkraftanlage oder dergleichen erzeugte elektrische Energie bedarfsgesteuert auf das gesamte Jahr zu verteilen. Dabei agiert das System als Inselsystem unabhängig vom elektrischen Netz. Vielmehr soll die Anlage die elektrische Autarkie des Hauses gewährleisten, sodass über das ganze Jahr hinweg keine elektrische Energie aus dem Stromnetz bezogen werden muss.

Die primäre Aufgabe des Hausenergiesystems ist es, die gewonnene elektrische Energie aus Photovoltaik (PV)-Modulen oder dergleichen dem Verbraucher im Haushalt verfügbar zu machen. Sekundär können bei Zeiten niedriger Last oder hoher Einstrahlung elektrische Energieüberschüsse in einem Batterie-Kurzzeit-Speicher zwischengespeichert werden. Tertiär kann im Wasserstoff-Langzeit-Speicher die elektrische Energie als gasförmiger Wasserstoff für Zeiten niedriger Einstrahlung wie Nacht, Winter oder dergleichen mittel- bis langfristig gespeichert und mittels Brennstoffzelle wieder jederzeit bedarfsgerecht zur Verfügung gestellt werden.

Neben energietechnischen Aufgaben fungiert das System auch als kontrollierte Wohnraumlüftung durch ein verbautes Lüftungsgerät.

Der in der Elektrolyseeinrichtung produzierte Wasserstoff fließt über die Wasserstoffleitung in die außenaufgestellte Druckspeicheranlage mit der Druckspeichereinrichtung 31.

Bei fehlender oder nicht ausreichender PV-Energie wird Energie aus der Batterie zur Deckung der Verbraucherlast entnommen. Reicht die im Kurzzeitspeicher vorrätige Energie nicht aus, kann die Brennstoffzelleinnrichtung den zusätzlichen elektrischen Energiebedarf decken. Im Brennstoffzellenbetrieb fließt der Wasserstoff über die Wasserstoffleitung aus der Druckspeichereinrichtung 31 zur Brennstoffzelleneinrichtung.

Ein zeitgleicher Betrieb von Brennstoffzelleneinrichtung und Elektrolyseeinrichtung ist ausgeschlossen. Das gesamte System wird zentral über einen Energy Manager mit einem prädiktiven Energiemanagement betrieben.

Das zweite Untersystem 30 ist prinzipiell für den Betrieb im Außenbereich vorgesehen, kann aber unter bestimmten Bedingungen auch innerhalb eines speziellen Bereichs des Hauses errichtet und betrieben werden.

Das erfindungsgemäße Verfahren, welches nachfolgend näher erläutert wird, sieht vor, dass das Einspeichern des Wasserstoffs in der Druckspeichereinrichtung 31 in Abhängigkeit einer dynamischen Referenztemperatur mit kalendarischer Abhängigkeit erfolgt. Dazu verfügt das Energiesystem 10 über die Steuereinrichtung 50, die über die Schnittstelle 51 zumindest zeitweilig mit der Temperaturmesseinrichtung 52 in Verbindung steht.

Der Druck in der Druckspeichereinrichtung 31 schwankt in Abhängigkeit der Speichertemperatur. Der temperaturbedingte Druckanstieg verhält sich dabei proportional. Die Druckspeichereinrichtung 31 und die hochdruckführenden Komponenten in deren Peripherie haben jedoch einen Betriebsdruck, der nicht überschritten werden darf. Beispielsweise kann es sich hierbei um eine Betriebsdruck von 300 bar handeln. Dieser Betriebsdruck ist ein so genannter statischer Betriebsdruck und wird vom Hersteller der Druckspeichereinrichtung 31 festgelegt. Die Druckspeichereinrichtung 31 ist zur maximalen Speicherung von Medium bis zu diesem statischen Betriebsdruck ausgelegt und zugelassen.

Aufgrund der Temperaturabhängigkeit des Speicherdrucks in der Druckspeichereinrichtung 31 kann es ohne Sicherheitsmaßnahmen passieren, dass es auf Grund von täglichen und/oder saisonalen Temperaturänderungen zu einem entsprechenden Überdruck in der Druckspeichereinrichtung kommt, so dass die Druckspeichereinrichtung 31 beschädigt, im schlimmsten Fall sogar zerstört wird. Oder aber es kommt aufgrund von Temperaturänderungen in der Druckspeichereirichtung 31 zu der Situation, dass der Wasserstroff unterhalb des Nenndrucks gespeichert ist, so dass Kapazitäten der Druckspeichereinrichtung 31 ungenutzt bleiben.

Erfindungsgemäß wird das Einspeichern des Wasserstoffs in der Druckspeichereinrichtung 31 nunmehr anhand dynamischer Referenztemperaturen $T_{ref}$ mit kalendarischer Abhängigkeit geregelt. Überdrücke durch hohe Temperaturen werden dabei vermieden. Gleichzeitig wird der Nenndruck für die Speicheranwendung maximal ausgenutzt. Zur Durchführung des Verfahrens kommt die in Figur 2 dargestellte Vergleichsdatei, bei der es sich bevorzugt um eine Vergleichstabelle 55 handelt, zum Einsatz,

Das erfindungsgemäße Verfahren sieht vor, dass, insbesondere in der Steuereinrichtung 50, ein von der Temperatur abhängiger dynamischer Betriebsdruck ermittelt wird, bis zu dem der Wasserstoff in der Druckspeichereinrichtung 31 eingespeichert werden kann. Dabei wird der dynamische Betriebsdruck anhand dynamischer Referenztemperaturwerte $T_{ref}$ mit zeitbezogener Abhängigkeit ermittelt. So wird eine Drucküberschreitung, beispielsweise im Sommer, vermieden. Nach dem Sommer führt ein dynamisches Herabsetzen der Referenztemperatur zu einer Erhöhung des berechneten maximalen Speicherdrucks. Ein entsprechendes nachträgliches Einspeichern nach dem Sommer ist so möglich. In der Verbrauchszeit, beispielsweise im Herbst/Winter, ist die Druckspeichereinrichtung 31 maximal beladen beziehungsweise genutzt.

Bevorzugt ist vorgesehen, dass der dynamische Betriebsdruck ermittelt wird, indem im Verlauf des Verfahrens bei zwei oder mehr Zeitwerten, die insbesondere ermittelt werden, zu jedem Zeitwert ein Referenztemperaturwert $T_{ref}$ ermittelt wird. Zu jedem Zeitwert wird der Betriebsdruck anhand der ermittelten Referenztemperaturwerte ermittelt, beispielsweise berechnet, insbesondere verändert und/oder eingestellt und/oder angepasst.

Beispielsweise können dazu in der Vergleichstabelle 55 eine Anzahl von Referenzzeitwerten 57 abgelegt sein, wobei jedem Referenzzeitwert 57 ein Referenztemperaturwert $T_{ref}$ zugeordnet ist. In der oberen Zeile der Vergleichstabelle 55 finden sich die Referenzzeitwerte 57. in der Beispielstabelle handelt es sich dabei um kalendarische Referenzzeitwerde 57 in Form von Monaten beziehungsweise einer Anzahl von Monaten. In dem Beispiel umfasst ein erster Referenzzeitwert den Zeitraum Januar bis August. Ein zweiter Referenzzeitwert umfasst den Monat September. Ein dritter Referenzzeitwert umfasst den Monat Oktober, während ein vierter Referenzzeitwert den Zeitraum November und Dezember umfasst. In der Vergleichstabelle ist jedem Referenzzeitwert ein entsprechender Referenztemperaturwert $T_{ref}$ zugeordnet, wobei sich die Referenztemperaturwerte in einer zweiten Zeile der Vergleichstabelle 55 befinden. Die dargestellte Vergleichstabelle ist rein exemplarischer Natur und dient zur Erläuterung des erfindungsgemäßen Verfahrens. Die Vergleichstabelle 55 kann beliebig komplex bestimmt beziehungsweise ausgestaltet werden/sein.

Die im Verlauf des Verfahrens betrachteten, beispielsweise ermittelten, Zeitwerte werden mit den Referenzzeitwerten 57 in der Vergleichstabelle 55 verglichen. Bei einer Übereinstimmung eines Zeitwerts mit einem Referenzzeitwert 57 wird anhand des dem entsprechenden Referenzzeitwert 57 zugeordneten Referenztemperaturwerts $T_{ref}$ der dynamische Betriebsdruck ermittelt, beispielsweise berechnet, insbesondere verändert und/oder eingestellt und/oder angepasst.

Dies kann beispielsweise nach der Formel

$$P_{dyn} = P_{stat} \times (T_{amb} / T_{ref})$$

erfolgen und wir nachfolgend anhand eines Beispiels verdeutlicht.

Angenommen, der statische Betriebsdruck $P_{stat}$ wurde vom Hersteller der Druckspeichereinrichtung 31 auf 300 bar festgelegt. Der betrachtete Zeitpunkt, zu dem der dynamische Betriebsdruck berechnet werden soll, soll sich im Zeitraum "Jan-Aug" befinden.

Dann gilt für diesen Zeitraum ein Referenztemperaturwert $T_{ref}$ von 35°C. Angenommen, zum Zeitpunkt der Bestimmung des dynamischen Betriebsdrucks $P_{dyn}$ wird von der Temperaturmesseinrichtung 52 eine Umgebungstemperatur $T_{amb}$ der Druckspeichereinrichtung 31 von 15°C gemessen. Grundlage für die Berechnung nach obiger Formel sind Temperaturen, die in Kelvin ermittelt werden, das heißt 273.15 K + $T_{amb}$ (°C) beziehungsweise 273.15 K + $T_{ref}$ (°C). Für das Beispiel beträgt die Umgebungstemperatur $T_{amb}$ dann 288.15 K, während die Referenztemperatur $T_{ref}$ 308.15 K beträgt. Dann beträgt der nach der obigen Formel berechnete dynamische Betriebsdruck $P_{dyn}$ 280.5 bar. Da sich die Temperatur in dem betrachteten Referenzzeitwert "Jan-Aug" stark ändern und auch noch die gemessenen 15°C überschreiten kann, wird die Druckspeichereirichtung 31 nur bis zu diesem berechneten dynamischen Betriebsdruck von 280.5 bar befüllt, um zu anderen Zeiten mit höheren Temperaturen einen Überdruck zu vermeiden. Würde bei der Berechnung herauskommen, dass dynamische Betriebsrücke von größer 300 bar möglich wären, würde die Befüllung dennoch bei dem festgelegten statischen Betriebsdruck von 300 bar abgebrochen.

Nach der Ermittlung des dynamischen Betriebsdrucks, was insbesondere in der Datenverarbeitungseinrichtung 53 der Steuereinrichtung 50 erfolgt, wird der Wasserstoff bis maximal zu dem dynamischen Betriebsdruck in die Druckspeichereinrichtung 31 eingespeichert. Die Überwachung, dass der dynamische Betriebsdruck dabei nicht überschritten wird, erfolgt mittels der Steuereinrichtung 50. Die Steuereinrichtung 53 steht dazu beispielsweise mit der in Figur 1 gezeigten Kompressoreinrichtung 34 in Kommunikationsverbindung und kann bei Erreichen des dynamischen Betriebsdruck der Kompressoreinrichtung 34 ein entsprechendes Steuersignal schicken, damit diese aufhört, weiter Medium in die Druckspeichereinrichtung 31 einzuspeichern.

Bezugszeichenliste

| | |
|---|---|
| 10 | Energiesystem (Hausenergiesystem) |
| 20 | Erstes Untersystem (Innensystem) |
| 21 | Erste Energiequelleneinrichtung (Elektrolyseeinrichtung) |
| 22 | Erste Energiesenkeneinrichtung (Brennstoffzelleneinrichtung) |
| 23 | Ventileinrichtung |
| 24 | Ventileinrichtung |
| 30 | Zweites Untersystem (Außensystem) |
| 31 | Druckspeichereinrichtung (Zweite Energiequelleneinrichtung) |
| 32 | Zweite Energiesenkeneinrichtung (Mitteldruckspeichereinrichtung) |
| 33 | Rückschlagventileinrichtung |
| 34 | Kompressoreinrichtung |
| 35 | Ventileinrichtung |
| 36 | Entspannungsvorrichtung (Druckminderer) |
| 37 | Durchflussbegrenzungseinrichtung |
| 40 | Verbindungsleitungseinrichtung |
| 40a | Bidirektionaler Leitungsabschnitt |
| 41 | Erste Seite des bidirektionalen Leitungsabschnitts |
| 42 | Zweite Seite des bidirektionalen Leitungsabschnitts |
| 50 | Steuereirichtung |
| 51 | Schnittstelle |
| 52 | Temperaturmesseinrichtung zur Messung der Umgebungstemperatur |
| 53 | Datenverarbeitungseirichtung |
| 54 | Speichereinrichtung |
| 55 | Vergleichstabelle |
| 56 | Datenaustauschverbindung |
| 57 | Referenzzeitwert |

**Patentansprüche**

1. Verfahren zum Einspeichern eines Mediums, insbesondere eines Gases, in eine Druckspeichereinrichtung (31), bei dem der Betriebsdruck, bis zu dem Medium in die Druckspeichereinrichtung eingespeichert werden darf, in Form eines von der Temperatur abhängigen dynamischen Betriebsdrucks ($P_{dyn}$) ermittelt wird, wobei der dynamische Betriebsdruck ($P_{dyn}$) ein veränderlicher Betriebsdruck ist, **dadurch gekennzeichnet, dass** der dynamische Betriebsdruck ($P_{dyn}$) anhand vorgegebener definierter dynamischer Referenztemperaturwerte ($T_{ref}$), die bestimmten Zeitpunkten zugeordnet sind, die sich in ihrer Höhe zu den bestimmten Zeitpunkten verändern und denen geeignete Betriebsdruckwerte zugeordnet sind ermittelt wird, dass der dynamische Betriebsdruck ($P_{dyn}$) zu den bestimmten Zeitpunkten anhand der dynamischen Referenztemperaturwerte ($T_{ref}$) verändert und/oder eingestellt und/oder angepasst wird, und dass das Medium zu den bestimmten Zeitpunkten nach der Ermittlung des dynamischen Betriebsdrucks ($P_{dyn}$) bis maximal zu dem dynamischen Betriebsdruck ($P_{dyn}$) in der Druckspeichereinrichtung (31) eingespeichert wird.

2. Verfahren nach Anspruch 1, **dadurch gekennzeichnet, dass** die dynamischen Referenztemperaturwerte ($T_{ref}$) als Funktion der Zeit $T_{ref} = f(t)$ bereitgestellt werden/sind, und dass die dynamischen Referenztemperaturwerte ($T_{ref}$) insbesondere mit einer kalendarischen Abhängigkeit $T_{ref} = f(dd:mm:yy)$ bereitgestellt werden/sind.

3. Verfahren nach einem der Ansprüche 1 oder 2, **dadurch gekennzeichnet, dass** es sich bei den dynamischen Referenztemperaturwerten ($T_{reff}$) um vorgegebene und/oder prognostizierte und/oder kalkulierte Temperaturwerte handelt.

4. Verfahren nach einem der Ansprüche 1 bis 3, **dadurch gekennzeichnet, dass** der dynamische Betriebsdruck ($P_{dyn}$) ermittelt wird, indem in Bezug auf die Druckspeichereinrichtung (31) Temperaturwerte ermittelt werden, und indem die ermittelten Temperaturwerte in Bezug zu den definierten dynamischen Referenztemperaturwerten ($T_{ref}$) gesetzt werden.

5. Verfahren nach Anspruch 4, **dadurch gekennzeichnet, dass** für die Ermittlung des dynamischen Betriebsdrucks ($P_{dyn}$) als ermittelte Temperaturwerte Werte der Umgebungstemperatur ($T_{amb}$) der Druckspeichereinrichtung (31) und/oder Temperaturwerte der Druckspeichereinrichtung (31) bereitgestellt werden.

6. Verfahren nach einem der Ansprüche 4 oder 5, **dadurch gekennzeichnet, dass** der dynamische Betriebsdruck ($P_{dyn}$) ermittelt wird nach der Formel $P_{dyn}$ = $P_{stat}$ x ($T_{amb}$ / $T_{ref}$), wobei $P_{dyn}$ für den dynamischen Betriebsdruck, $P_{stat}$ für den statischen Betriebsdruck, $T_{amb}$ für den Umgebungstemperaturwert und/oder den Temperaturwert der Druckspeichereinrichtung, und $T_{ref}$ für den Referenztemperaturwert steht.

7. Verfahren nach einem der Ansprüche 1 bis 6, **dadurch gekennzeichnet, dass** der dynamische Betriebsdruck ($P_{dyn}$) ermittelt wird, indem im Verlauf des Verfahrens bei zwei oder mehr voneinander unterschiedlichen Zeitwerten, die insbesondere ermittelt werden, zu jedem Zeitwert ein Referenztemperaturwert ($T_{ref}$) ermittelt wird und indem der dynamische Betriebsdruck ($P_{dyn}$) zu jedem Zeitwert anhand der ermittelten Referenztemperaturwerte ($T_{ref}$) ermittelt, vorzugsweise berechnet, insbesondere verändert und/oder eingestellt und/oder angepasst wird.

8. Verfahren nach Anspruch 7, **dadurch gekennzeichnet, dass** in einer Vergleichstabelle (55) eine Anzahl von Referenzzeitwerten (57) abgelegt sind, dass jedem Referenzzeitwert (57) ein Referenztemperaturwert ($T_{ref}$) zugeordnet ist, dass die Zeitwerte mit den Referenzzeitwerten (57) in der Vergleichstabelle (55) verglichen werden und dass bei einer Übereinstimmung eines Zeitwerts mit einem Referenzzeitwert (57) anhand des dem entsprechenden Referenzzeitwert (57) zugeordneten Referenztemperaturwerts ($T_{ref}$) der dynamische Betriebsdruck ($P_{dyn}$) ermittelt, vorzugsweise berechnet, insbesondere verändert und/oder eingestellt und/oder angepasst wird.

9. Verfahren nach einem der Ansprüche 1 bis 8, **dadurch gekennzeichnet, dass**, wenn der ermittelte dynamische Betriebsdrucks ($P_{dyn}$) größer als ein vom Hersteller der Druckspeichereinrichtung (31) festgelegter statischer Betriebsdruck ($P_{stat}$) ist, das Medium nach Ermittlung des dynamischen Betriebsdrucks ($P_{dyn}$) bis zu dem statischen Betriebsdruck ($P_{stat}$) in die Druckspeichereinrichtung (31) eingespeichert wird.

10. Computerprogrammprodukt, welches eine Datenverarbeitungseinrichtung (53) befähigt, sobald das Computerprogrammprodukt in der Datenverarbeitungseinrichtung (53) ausgeführt wird, und vorzugsweise in einer der Datenverarbeitungseinrichtung (53) zugeordneten Speichereinrichtung (54) gespeichert ist, ein Verfahren gemäß einem der Ansprüche 1 bis 9 auszuführen.

11. Steuereinrichtung (50), welche bereitgestellt ist, um die Speicherung eines Mediums in einer Druckspeichereinrichtung (31) zu steuern, wobei die Steuereinrichtung (50) derart ausgebildet ist, dass sie in der Lage ist, das Verfahren nach einem der Ansprüche 1 bis 9 durchzuführen und/oder dass die Steuereinrichtung (50) eine Datenverarbeitungseinrichtung (53) oder eine Schnittstelle zu einer externen Datenverarbeitungseinrichtung aufweist, wobei ein Computerprogrammprodukt nach Anspruch 10 in der Datenverarbeitungseinrichtung (53) ausgeführt wird.

12. Energiesystem (10), insbesondere Hausenergiesystem, aufweisend wenigstens eine Energiequelleneinrichtung (21) zum Erzeugen eines Mediums sowie eine davon räumliche getrennte Druckspeichereinrichtung (31) zum Speichern des erzeugten Mediums, **dadurch gekennzeichnet, dass** das Energiesystem (10) eine Steuereinrichtung (50) nach Anspruch 11 aufweist, oder dass das Energiesystem (10) derart bereitgestellt ist, dass es in der Lage ist, das Verfahren nach einem der Ansprüche 1 bis 9 auszuführen.

## Claims

1. A method for storing a medium, in particular a gas, into a pressure storage device (31), in which the operating pressure, up to which the medium may be stored in the pressure storage device, is determined in the form of a dynamic operating pressure ($P_{dyn}$) dependent on the temperature, wherein the dynamic operating pressure ($P_{dyn}$) is a variable operating pressure, **characterized in that** the dynamic operating pressure ($P_{dyn}$) is determined on the basis of specified defined dynamic reference temperature values ($T_{ref}$), which are assigned to determined points of time, which change in their height at the determined points of time and to which suitable operating pressure values are associated, that the dynamic operating pressure ($P_{dyn}$) is changed and/or adjusted and/or adapted at the determined points of time on the basis of the dynamic reference temperature values ($T_{ref}$), and that, after the dynamic operating pressure ($P_{dyn}$) has been determined, the medium is stored in the pressure storage device maximally up to the dynamic operating pressure ($P_{dyn}$).

2. The method according to Claim 1, **characterized in that** the dynamic reference temperature values ($T_{ref}$) are/get provided as a function of the time $T_{ref}$ = f(t), and **in that** the dynamic reference temperature values ($T_{ref}$) are/get provided in particular with a calendric dependency $T_{ref}$ = f(dd:mm:yy).

3. The method according to anyone of Claims 1 or 2, **characterized in that** the dynamic reference temperature values ($T_{ref}$) are predetermined and/or predicted and/or calculated temperature values.

4. The method according to anyone of Claims 1 to 3, **characterized in that** the dynamic operating pressure ($P_{dyn}$) is determined **in that** temperature values are determined with respect to the pressure storage device (31), and **in that** said determined temperature values are set in relation to the defined dynamic reference temperature values ($T_{ref}$).

5. The method according to Claim 4, **characterized in that**, for the determination of the dynamic operating pressure ($P_{dyn}$), values of the ambient temperature ($T_{amb}$) of the pressure storage device (31) and/or temperature values of the pressure storage device (31) are provided as determined temperature values.

6. The method according to anyone of Claims 4 or 6, **characterized in that** the dynamic operating pressure ($P_{dyn}$) is determined according to the formula $P_{dyn} = P_{stat} \times (T_{amb} / T_{ref})$, wherein $P_{dyn}$ stands for the dynamic operating pressure, $P_{stat}$ stands for the static operating pressure, $T_{amb}$ stands for the ambient temperature value and/or temperature value of the pressure storage device, and $T_{ref}$ stands for the reference temperature value.

7. The method according to anyone of Claims 1 to 6, **characterized in that** the dynamic operating pressure ($P_{dyn}$) is determined **in that**, during the course of the method, at two or more time values being different from each other, which are determined in particular, a reference temperature value ($T_{ref}$) is determined at each time value, and, at each time value, the dynamic operating pressure ($P_{dyn}$) is then determined on the basis of the determined reference temperature values ($T_{ref}$), preferably calculated, in particular modified and/or adjusted and/or adapted.

8. The method according to Claim 7, **characterized in that** a number of reference time values (57) are stored in a comparison table (55), **in that** a reference temperature value ($T_{ref}$) is assigned to each reference time values (57), **in that** the time values are compared with the reference time values (57) in the comparison table (55), and **in that**, if a time value matches with one reference time values (57), the dynamic operating pressure ($P_{dyn}$) is determined, preferably calculated, in particular modified and/or adjusted and/or adapted on the basis of the reference temperature value ($T_{ref}$) assigned to the corresponding reference time value (57).

9. The method according to anyone of Claims 1 to 8, **characterized in that**, if the determined dynamic operating pressure ($P_{dyn}$) is higher than a static operating pressure ($P_{stat}$) specified by the manufacturer of the pressure storage device (31), the medium is stored in the pressure storage device (31), after the dynamic operating pressure ($P_{dyn}$) has been determined, up to the static operating pressure ($P_{stat}$).

10. A computer program product, which enables a data processing device (53), as soon as the computer program product is executed in the data processing device (53), and is preferably stored in a storage device (54) assigned to the data processing device, to carry out a method according to anyone of Claims 1 to 9.

11. A control device (50), which is provided in order to control the storage of a medium in a pressure storage device (31), wherein the control device (50) is configured in such a way that it is capable to carry out the method according to anyone of Claims 1 to 9 and/or in that the control device (50) comprises a data processing device (53) or an interface to an external data processing device, wherein a computer program product according to claim 10 is executed in the data processing device (53).

12. An energy system (10), in particular a house energy system, comprising at least one energy source device (21) for generating a medium and a spatially spaced apart pressure storage device (31) for storing the generated medium, **characterized in that** the energy system (10) comprises a control device (50) according to Claim 11, or **in that** the energy system (10) is provided in such a way that it is capable to carry out the method according to anyone of Claims 1 to 9.

**Revendications**

1. Procédé de stockage d'un fluide, en particulier d'un gaz, dans un dispositif de stockage sous pression (31), pour lequel la pression de fonctionnement, jusqu'à laquelle peut être stocké du fluide dans le dispositif de stockage sous pression, est déterminée sous la forme d'une pression de fonctionnement ($P_{dyn}$) dynamique dépendant de la température, dans lequel la pression de fonctionnement ($P_{dyn}$) dynamique est une pression de fonctionnement variable, **caractérisé en ce que** la pression de fonctionnement ($P_{dyn}$) dynamique est déterminée à l'aide de valeurs de température de référence ($T_{ref}$) dynamiques définies prédéterminées, qui sont associées à des moments déterminés, qui changent en grandeur aux moments déterminés et auxquels sont associées des valeurs de pression de fonctionnement appropriées, **en ce que** la pression de fonctionnement ($P_{dyn}$) dynamique est modifiée et/ou est réglée et/ou adaptée aux moments déterminés à l'aide des valeurs de température de référence ($T_{ref}$) dynamiques, et **en ce que** le fluide est stocké dans le dispositif de stockage sous pression (31) aux moments déterminés après la détermination de la pression de fonctionnement ($P_{dyn}$) dynamique jusqu'à la pression de fonctionnement ($P_{dyn}$) dynamique au maximum.

2. Procédé selon la revendication 1, **caractérisé en ce que** les valeurs de température de référence ($T_{ref}$) dynamiques sont fournies en fonction du temps $T_{ref}$ = f(t), et que les valeurs de température de référence ($T_{ref}$) dynamiques sont fournies en particulier avec une dépendance calendaire $T_{ref}$ = f(dd:mm:yy).

3. Procédé selon l'une quelconque des revendications 1 ou 2, **caractérisé en ce que** les valeurs de température de référence ($T_{reff}$) dynamiques sont des valeurs de température prédéterminées et/ou pronostiquées et/ou calculées.

4. Procédé selon l'une quelconque des revendications 1 à 3, **caractérisé en ce que** la pression de fonctionnement ($P_{dyn}$) dynamique est déterminée **en ce que** des valeurs de température sont déterminées en ce qui concerne le dispositif de stockage sous pression (31), et **en ce que** les valeurs de température déterminées sont établies en ce qui concerne les valeurs de température de référence ($T_{ref}$) dynamiques définies.

5. Procédé selon la revendication 4, **caractérisé en ce que** pour la détermination de la pression de fonctionnement ($P_{dyn}$) dynamique comme valeurs de température déterminées, des valeurs de température ambiante ($T_{amb}$) du dispositif de stockage sous pression (31) et/ou des valeurs de température du dispositif de stockage sous pression (31) sont fournies.

6. Procédé selon l'une quelconque des revendications 4 ou 5, **caractérisé en ce que** la pression de fonctionnement ($P_{dyn}$) dynamique est déterminée selon la formule $P_{dyn} = P_{stat} * (T_{amb} / T_{ref})$, dans lequel $P_{dyn}$ représente la pression de fonctionnement dynamique, $P_{stat}$ la pression de fonctionnement statique, $T_{amb}$ la valeur de température ambiante et/ou la valeur de température du dispositif de stockage sous pression, et $T_{ref}$ la valeur de température de référence.

7. Procédé selon l'une quelconque des revendications 1 à 6, **caractérisé en ce que** la pression de fonctionnement ($P_{dyn}$) dynamique est déterminée **en ce qu'**au cours du procédé pour deux ou plusieurs valeurs de temps différentes les unes des autres qui sont déterminées en particulier, une valeur de température de référence ($T_{ref}$) est déterminée pour chaque valeur de temps et **en ce que** la pression de fonctionnement ($P_{dyn}$) dynamique est déterminée, de préférence calculée, en particulier modifiée et/ou réglée et/ou adaptée pour chaque valeur de temps à l'aide des valeurs de température de référence ($T_{ref}$) déterminées.

8. Procédé selon la revendication 7, **caractérisé en ce qu'**un nombre de valeurs de temps de référence (57) est enregistré dans un tableau de comparaison (55), **en ce qu'**une valeur de température de référence ($T_{ref}$) est associée à chaque valeur de temps de référence (57), **en ce que** les valeurs de temps sont comparées aux valeurs de temps de référence (57) dans le tableau de comparaison (55) et **en ce que**, en cas de concordance d'une valeur de temps avec une valeur de temps de référence (57), la pression de fonctionnement ($P_{dyn}$) dynamique est déterminée, de préférence calculée, en particulier modifiée et/ou réglée et/ou adaptée à l'aide de la valeur de température de référence ($T_{ref}$) associée à la valeur de temps de référence (57) correspondante.

9. Procédé selon l'une quelconque des revendications 1 à 8, **caractérisé en ce que** lorsque la pression de fonctionnement ($P_{dyn}$) dynamique déterminée est supérieure à une pression de fonctionnement ($P_{stat}$) statique fixée par le fabricant du dispositif de stockage sous pression (31), le fluide est stocké dans le dispositif de stockage sous pression (31) après la détermination de la pression de fonctionnement ($P_{dyn}$) dynamique jusqu'à la pression de fonctionnement ($P_{stat}$) statique.

10. Produit de programme informatique qui permet à un dispositif de traitement de données (53), dès que le produit de programme informatique est réalisé dans le dispositif de traitement de données (53), et de préférence est enregistré dans un dispositif de stockage (54) associé au dispositif de traitement de données (53), de réaliser un procédé selon l'une quelconque des revendications 1 à 9.

11. Dispositif de commande (50) qui est fourni afin de commander le stockage d'un fluide dans un dispositif de stockage sous pression (31), dans lequel le dispositif de commande (50) est réalisé de telle manière qu'il soit en mesure de mettre en oeuvre le procédé selon l'une quelconque des revendications 1 à 9 et/ou en ce que le dispositif de commande (50) présente un dispositif de traitement de données (53) ou une interface vers un dispositif de traitement de données externe, dans lequel un produit de programme informatique selon la revendication 10 est réalisé dans le dispositif de traitement de données (53).

12. Système d'énergie (10), en particulier système d'énergie domestique, présentant au moins un dispositif de source d'énergie (21) pour la génération d'un fluide ainsi qu'un dispositif de stockage sous pression (31) séparé spatialement de celui-ci pour le stockage du fluide généré, **caractérisé en ce que** le système d'énergie (10) présente un appareil de commande (50) selon la revendication 11, ou **en ce que** le système d'énergie (10) est fourni de telle manière qu'il soit en mesure de réaliser le procédé selon l'une quelconque des revendications 1 à 9.

**Fig. 1**

| Monat | Jan-Aug | Sep | Okt | Nov-Dez |
|---|---|---|---|---|
| T_reff (°C) | 35 | 25 | 20 | 15 |

55

57  57  57  57

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016203336 A1
- US 2016273710 A1
- WO 2017089468 A1
- WO 2017089469 A1